# EUROPÄISCHE PATENTANMELDUNG

(11) **EP 0 730 941 A1**
(43) Veröffentlichungstag der Anmeldung: **11.09.1996**
(21) Anmeldenummer: 96103237.2
(22) Anmeldetag: 02.03.1996
(51) Int. Cl.: B29C 49/56, B29C 33/20

(54) **Verfahren und Vorrichtung zum Herstellen von Hohlkörpern aus thermoplastischem Kunststoff**

(30) Priorität: 10.03.1995 DE 19508525
(71) Anmelder: KAUTEX WERKE REINOLD HAGEN AG, D-53229 Bonn (DE)
(72) Erfinder: Räder, Günter, 57612 Kettenhausen (DE); Fey, Karl Heinz, 53332 Bornheim (DE); Lesch, Hans-Dieter, 53229 Bonn (DE); Gernant, Manfred E., 53840 Troisdorf (DE)
(74) Vertreter: Koepsell, Helmut, Dipl.-Ing.

(57) **Zusammenfassung**

Die Erfindung betrifft ein Verfahren und eine Vorrichtung zum Herstellen von Hohlkörpern aus thermoplastischem Kunststoff im Blasverfahren unter Verwendung einer aus wenigstens zwei Teilen bestehenden Blasform (10a,10b) und unter Verwendung wenigstens einer Einrichtung (30), durch welche die Blasformteile durch in Schließrichtung wirkende Kräfte beaufschlagt und bei geschlossener Blasform miteinander verriegelt werden. Die Verriegelungseinrichtung (30) soll dabei wenigstens einen großen Teil der aus dem Blasdruck resultierenden Kräfte aufnehmen und ggf. auch wenigstens einen Teil der zum Abquetschen von überschüssigem Material von dem in der Blasform aufzuweitenden Vorformling (16) erforderlichen Kräfte aufbringen. Dabei werden die von der Verriegelungseinrichtung aufgebrachten Kräfte unter Zwischenschaltung von wenigstens zwei einen Abstand voneinander aufweisenden hydraulischen Kraftübertragungsmitteln (40) auf die Formteile (10a,10b) übertragen, wobei die wenigstens zwei hydraulischen Kraftübertragungsmittel (40) hydraulisch miteinander in Verbindung stehen, um so eine Vergleichmäßigung der auf die Blasformteile (10a,10b) einwirkenden Kräfte zu erzielen.

## Beschreibung

Die Erfindung betrifft ein Verfahren und eine Vorrichtung zum Herstellen von Hohlkörpern aus thermoplastischem Kunststoff im Blasverfahren unter Verwendung einer aus wenigstens zwei Teilen bestehenden Blasform.

Blasformen, insbesondere solche, die beim Extrusions-Blasverfahren angewendet werden, sind im allgemeinen mehrteilig, insbesondere zweiteilig ausgebildet, wobei die Teile jeweils zwischen einer Position, in welcher die Blasform geöffnet ist, und einer Position, in welcher die Blasform geschlossen ist, relativ zueinander bewegbar sind. Für das Öffnen und Schließen der Blasform sind in vielen Fällen hydraulische Zylinder-Kolben-Einheiten vorgesehen. Dabei kann jedem Blasformteil eine Zylinder-Kolben-Einheit zugeordnet sein. Es ist aber auch bekannt, beiden Blasformteilen eine gemeinsame Zylinder-Kolben-Einheit zuzuordnen. Ferner ist es bekannt, dafür mechanische Antriebsmittel, z.B. eine oder mehrere Schraubenspindeln, vorzusehen.

Im folgenden ist überwiegend von Blasformhälften die Rede, da in sehr vielen Fällen die Blasform symmetrisch, also hälftig unterteilt ist. Damit soll jedoch keine Beschränkung auf hälftig unterteilte Blasformen verbunden sein. Vielmehr ist die Erfindung auch in solchen Fällen anwendbar, in denen die Blasform unsymmetrisch und ggf. auch in mehr als zwei Teilen unterteilt ist.

Es ist beispielsweise aus der US-PS 4,594,067 bekannt, Blasformen in der Schließposition mechanisch zu verriegeln. Da aufgrund der zum Aufweiten des Vorformlings in der Blasform erforderlichen Überdrucks erhebliche Kräfte auf die Blasformteile einwirken, deren Größe allgemein mit der Größe des herzustellenden Hohlkörpers und damit auch mit der Größe der Blasform zunimmt, dient die mechanische Verriegelung vor allem dazu, die Antriebe für die Öffnungs- und Schließbewegungen von den durch den Blasdruck verursachten Kräften zu entlasten, zumal es dann im allgemeinen möglich ist, kleinere Antriebe für die Öffnungs- und Schließbewegung zu verwenden.

Zum Zwecke des mechanischen Verriegelns der Blasformteile in der Schließposition sind in der Mehrzahl der Fälle an den Blasformteilen oder den sie tragenden, im allgemeinen plattenförmigen Halterungen oder an sonstigen Elementen, die mit der Blasform direkt oder indirekt verbunden sind, Teile wenigstens eines Verriegelungssystems angebracht, dessen Kupplungsglieder in der letzten Phase des Schließvorganges miteinander in Eingriff gebracht werden. Dabei werden durch das Verriegelungssystem in Schließrichtung der Blasformteile wirkende Kräfte aufgebracht, durch die beide Blasformteile gegeneinander verriegelt und verspannt werden. In vielen Fällen wird zudem auch in der letzten Phase des Schließvorganges das Verriegelungssystem dazu benutzt, die beiden Blasformteile in die endgültige Schließposition zu bewegen. Beim Extrusions-Blasformverfahren werden in dieser letzten Phase des Schließvorganges auch überschüssige Materialabschnitte vom Vorformling abgetrennt. Die dazu erforderlichen hohen Kräfte können ebenfalls von der Verriegelungseinrichtung aufgebracht werden, wie dies auch in der US-PS 4,594,067 beschrieben ist.

Da die Verriegelungseinrichtung und somit die durch sie übertragenen Kräfte mehr oder weniger punktförmig an den sie tragenden Teilen angreifen, kommt es jedenfalls bei Vorliegen ungünstiger Umstände zu einem Verbiegen der Schließplatten unter der Einwirkung der durch die Verriegelungseinrichtung übertragenen Kräfte. Dies ist auch darauf zurückzuführen, daß diese Kräfte außerhalb der Schließfläche der Blasformteile, d. h., bezogen auf die Blasform, exzentrisch wirksam sind. Selbst ein geringfügiges Verbiegen wenigstens einer der Formhalteplatten hat zur Folge, daß die Blasformteile in der an ihrer Trennfläche nicht gleichförmig aneinander zur Anlage kommen mit der Folge, daß die Blasform nicht einwandfrei schließt. Dies führt zwangsläufig zu nachteiligen Auswirkungen auf die Qualität der blasgeformten Artikel.

Wenn die Verriegelungseinrichtung darüberhinaus auch in der letzten Phase der Schließbewegung, ggf. zusätzlich zu dem für die Öffnungs- und Schließbewegungen vorhandenen Antrieb, die beiden Blasformteile gegeneinander bewegt und dabei die Abquetschvorgänge am Vorformling zumindest unterstützt, besteht zudem die Gefahr, daß der Abquetschvorgang entlang dem Umfang des Formnestes oder Teilen des Umfanges des Formnestes nicht überall in gleichmäßiger Weise erfolgt. Diese unerwünschten, sich ebenfalls aus der Durchbiegung der Formhalteplatten ergebenden Wirkungen nehmen mit der Größe der Blasform und damit auch der Formhalteplatten zu. Sie treten nicht nur bei Blasformen zur Herstellung großer Hohlkörper, beispielsweise Kfz.-Tanks, auf. Vielmehr sind diese Probleme auch an solchen Blasformen zu erwarten, die zur Herstellung kleinerer Hohlkörper dienen, jedoch mit sehr viel Formnestern versehen sind, so daß sich insgesamt ebenfalls eine große Blasformeinheit mit entsprechend großen Formhalteplatten ergibt. Selbstverständlich ist das Ausmaß der Durchbiegung, gemessen in absoluten Werten, sehr gering. Es wird normalerweise nur im Bereich von wenigen mm liegen. Jedoch kann dies ausreichen, um die vorbeschriebenen unerwünschten Effekte hervorzurufen.

Es ist zwar bekannt, daß die vorbeschriebenen nachteiligen Folgen durch entsprechend große Dimensionierung der Formhalteplatten zumindest merklich verringert werden können. Jedoch führt dies zu einem entsprechend großen Materialaufwand und auch zu großen Gewichten der zu bewegenden Teile der Blasform bzw. des gesamten Schließgestells, welches die Blasform aufnimmt.

Der Erfindung liegt die Aufgabe zugrunde, Verfahren und Vorrichtung zum Herstellen von Hohlkörpern aus thermoplastischem Kunststoff im Blasverfahren unter Verwendung einer aus wenigstens zwei Teilen bestehenden Blasform so auszugestalten, daß die vorbeschriebenen Nachteile zumindest weitgehend reduziert werden. Insbesondere wird angestrebt, daß die durch die Verriegelungseinrichtung auf die Blasformteile übertragenen Kräfte zu keinen ins Gewicht fallenden Ungleichmäßigkeiten führen bezüglich der Kräfte, mit denen die Blaformteile in Schließrichtung gegeneinander gedrückt werden, obwohl die Komponenten der Verriegelungseinrichtung neben und/oder unterhalb und oberhalb der Blasform angeordnet sind.

Zur Lösung dieser Aufgabe schlägt die Erfindung vor, daß die von der Verriegelungseinrichtung in Schließrichtung aufgebrachten Kräfte auf wenigstens eines der Blasformteile unter Zwischenschaltung von wenigstens zwei einen Abstand voneinander aufweisenden hydraulischen Kraftübertragungsmitteln übertragen werden und die wenigstens zwei hydraulischen Kraftübertragungsmitteln hydraulisch miteinander in Verbindung stehen. Die Kraftübertragungsmittel sind vorzugsweise als Zylinder-Kolben-Einheiten ausgebildet, deren Kolben lediglich einen kurzen Hub ausführen können, der z. B. nur einige Milimeter beträgt. Bei Anordnung der Komponenten der Verriegelungseinrichtung beispielsweise seitlich neben den Blasformteilen könnten die hydraulischen Kraftübertragungsmittel entlang wenigstens einer im wesentlichen horizontalen Linie angeordnet sein, wobei jeweils ein Übertragungsmittel nahe einer der seitlichen Begrenzungen der Blasform bzw. der Formhalteplatte und ein Übertragungsmittel etwa im mittleren Bereich zwischen den beiden seitlichen Übertragungsmitteln angeordnet wäre. Da die Verriegelungseinrichtung nahe den beiden seitlichen Begrenzungen der Blasformteile bzw. der jeweiligen Formhalteplatte angreift, würden die beiden seitlich angeordneten Kraftübertragungsmittel aufgrund der unter der Einwirkung der Kräfte beginnenden Verbiegung der Aufspannplatte stärker beaufschlagt werden mit der Folge, daß ein entsprechender Teil der Hydraulikflüssigkeit aus diesen seitlichen Kraftübertragungsmitteln über die Verbindungsleitungen in das mittlere Kraftübertragungsmittel verdrängt wird und somit dort eine entsprechend stärkere Beaufschlagung des Kolbens mit der Hydraulikflüssigkeit und somit auch eine entsprechend stärkere Kraftbeaufschlagung erfolgen, die zu einer Vergleichmäßigung der Gesamt-Kraftbeaufschlagung über die Breite der Blasform führt. Aufgrund der hydraulischen Verbindung der diesem System angehörenden Kraftübertragungsmitteln erfolgt somit ein Druckausgleich mit der Folge eines entsprechenden Ausgleichs der auf das Blasformteil einwirkenden Kräfte.

Normalerweise wird es zweckmäßig, unter Umständen sogar erforderlich sein, allen Formteilen derartige Kraftübertragungsmittel zuzuordnen, da normalerweise auf beide Formteile die bezüglich ihrer Größe übereinstimmende Kräfte einwirken, die sich lediglich bezüglich ihrer Richtung voneinander unterscheiden.

Die Erfindung sieht weiterhin die Möglichkeit vor, daß wenigstens zwei Gruppen derartiger Kraftübertragungsmittel vorhanden sind, von denen die Kraftübertragungsmittel jeder Gruppe hydraulisch miteinander verbunden sind. Die Verwendung von mehr als einer Gruppe wird insbesondere dann zweckmäßig sein, wenn die Blasformteile eine sehr große Erstreckung in wenigstens einer Richtung haben und es insbesondere darauf ankommt, beispielsweise im unteren und im oberen Bereich der Blasform, also dort, wo in der Mehrzahl der Fälle Überschußmaterial vom Vorformling abgequetscht werden muß, eine Vergleichmäßigung der Schließkräfte im vorbeschriebenen Sinn zu bewirken.

In diesem Zusammenhang kann es auch zweckmäßig sein, die Kraftübertragungsmittel und den Querträger verstellbar anzubringen derart, daß eine Anpassung an unterschiedliche Blasformgrößen oder Blasformgestaltungen möglich ist. In vielen Fällen wird eine Blasformvorrichtung, d. h., das Schließgestell im Laufe der Zeit zur Herstellung von unterschiedlichen blasgeformten Artikeln verwendet. Dies setzt voraus, daß nach Beendigung der Herstellung eines bestimmten Artikels die dafür benutzten Blasformteile gegen andere Blasformteile ausgetauscht werden müssen, bei denen beispielsweise die Abquetschkanten eine andere Höhenlage aufweisen als bei der vorher benutzten Blasform. In diesem Falle kann es vorteilhaft sein, die Kraftübertragungsmittel so anzubringen, daß sie bezüglich ihrer Position an die Position bestimmter Abquetschbereiche angepaßt werden können.

In der Zeichnung sind derzeit bevorzugte Ausführungsbeispiele der Erfindung dargestellt. Es zeigen:
- Fig. 1: im Schema die Seitenansicht einer Extrusions-Blas-Vorrichtung mit geöffneter Blasform,
- Fig. 2: eine der Fig. 1 entsprechende Darstellung mit geschlossener Blasform,
- Fig. 3: eine Ansicht in Richtung der Pfeile III-III der Fig. 1,
- Fig. 4: eine Ansicht in Richtung des Pfeiles IV der Fig. 1,
- Fig. 5: in größerem Maßstab eine Verriegelungseinheit mit den beiden zusammenwirkenden Kupplungsteilen im Eingriff, teilweise im Schnitt.
- Fig. 6: einen Schnitt etwa entlang der Llinie VI-VI der Fig. 5,
- Fig. 7: in größerem Maßstab ein hydraulisches Kraftübertragungsmittel mit den mit ihnen zusammenwirkenden Teilen einer anderen Ausführungsform.

Das in der Zeichnung dargestellte Ausführungsbeispiel weist eine zweigeteilte Blasform 10 auf, deren beide Blasformhälften 10a, 10b jeweils an einer Formhalteplatte 12a, 12b lösbar angebracht sind. Oberhalb der Blasform 10 ist ein Extrusionskopf 14 angeordnet, der an seiner Unterseite mit einer Düse zum Extrudieren eines zumeist schlauchförmigen Vorformlings 16 versehen ist. Dieser Vorformling 16 wird in warmplastischem Zustand in die Blasform 10 eingebracht und in dieser durch inneren Überdruck bis zur Anlage an der Wand des Formnestes 18a, 18b der Blasform 10 aufgeweitet.

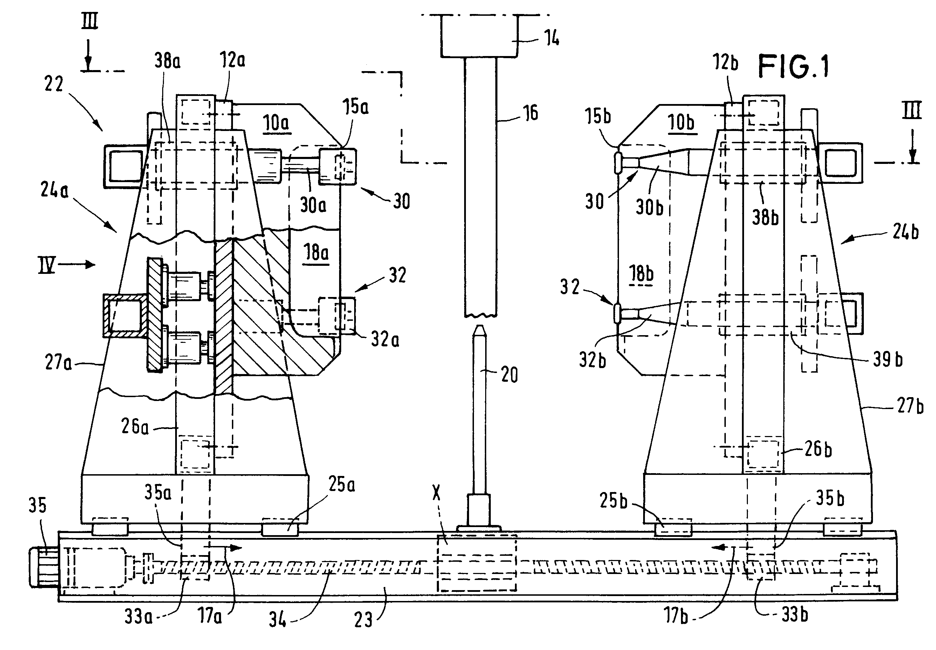

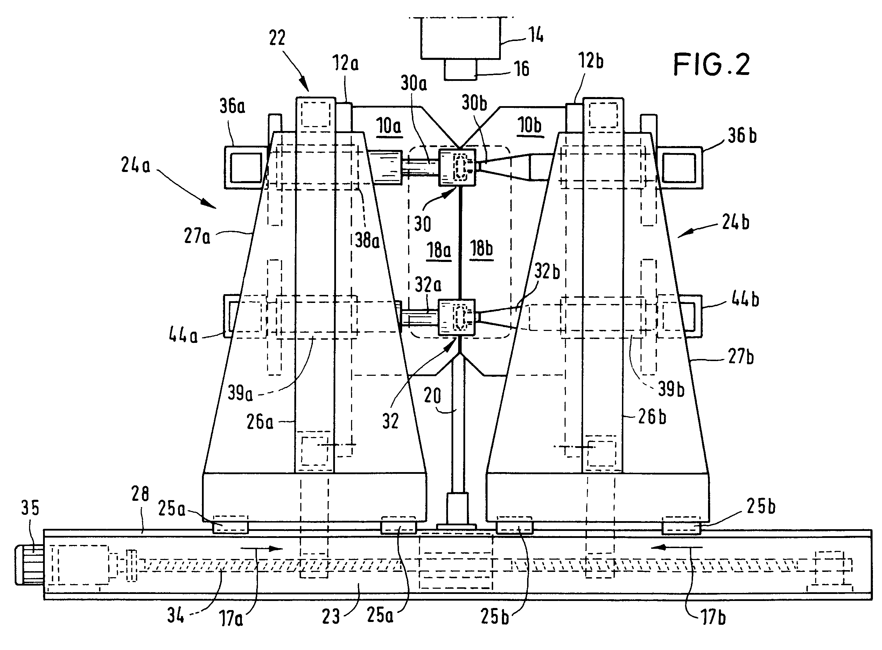

Nachdem der Vorformling 16 die für die Herstellung eines Hohlkörpers erforderliche Länge erreicht hat, wird die gemäß der Darstellung der Fig. 1 offene Blasform 10 durch Bewegen der beiden Formhälften 10a, 10b in Richtung der Pfeile 17a bzw. 17b geschlossen, d.h., in den in Fig. 2 dargestellten Zustand gebracht. Im Zuge der Schließbewegung wird der Vorformling 16 an seinem oberen Ende durch die zu diesem Zweck mit Abquetschkanten 15a, 15b versehenen Blasformhälften 10a, 10b unter Abquetschen von überschüssigem Material verschlossen und am unteren Ende um den von unten in den Vorformling 16 hineinragenden Blasdorn 20 gepreßt, wobei dort ebenfalls überschüssiges Material im Zusammenwirken zwischen Blasformhälften und Blasdorn abgequetscht werden kann. Das Druckmedium zum Aufweiten des Vorformlings 16 innerhalb der geschlossenen Blasform 10 wird über den Blasdorn 20 zugeführt. Es ist auch möglich, den Blasdorn oder eine andere Einrichtung für die Zuführung des Druckmittels anderswo anzuordnen, beispielsweise derart, daß der Blasdorn bzw. die andere Einrichtung von oben in die Blasform und den darin befindlichen Vorformling hineinragt. Alle vorgenannten Arbeitsabläufe und Anordnungen sind dem Fachmann bekannt, so daß sie nicht im einzelnen dargestellt und erläutert zu werden brauchen.

Die Blasform 10 ist Teil eines Schließgestells 22, welches mit einem Grundrahmen 23 versehen ist, auf welchen zwei Gestellteile 24a, 24b hin- und herbewegbar sind, die die Formhalteplatten 12a, 12b und die daran angebrachten Formhälften 10a, 10b tragen. Die beiden Gestellteile 24a, 24b weisen jeweils einen vertikalen Rahmen 26a, 26b auf, der mit zwei Seitenplatten 27a bzw. 27b versehen ist, die sich Schließ- bzw. Öffnungsrichtung von oben nach unten verbreitern. Der Grundrahmen 23 ist mit in Schließ- bzw. Öffnungsrichtung verlaufenden Führungen in Form von Schienen 28 versehen, an denen Schuhe 25a, 25b gleitend geführt sind, die jeweils unten an den Seitenplatten 27a, 27b befestigt sind.

Das Hin- und Herbewegen der beiden Gestellteile 24a, 24b entlang den Führungen 28 wird durch zwei seitlich angeordnete Spindeln 34 bewirkt, die jeweils von einem Motor 35 angetrieben werden. Die beiden Gestellteile 24a, 24b sind beidseitig mit nach unten vorstehenden Fortsätzen 35a, 35b versehen, die jeweils eine Spindelmutter 33a, 33b tragen. Es bedarf keiner näheren Erläuterung, daß durch Drehung der beiden Spindeln 34 die beiden Gestellteile 24a, 24b in Öffnungs- bzw. Schließrichtung bewegt werden, wobei zur Erzielung gegenläufiger Bewegungen lediglich erforderlich ist, daß die Gewinde der beiden Spindelmuttern ebenfalls gegenläufig ausgebildet sind. Es ist selbstverständlich auch möglich, anstelle der Spindeln für die Schließ- und Öffnungsbewegungen andere Antriebsmittel, beispielsweise die einleitend bereits erwähnten hydraulischen Zylinder-Kolben-Einheiten, vorzusehen.

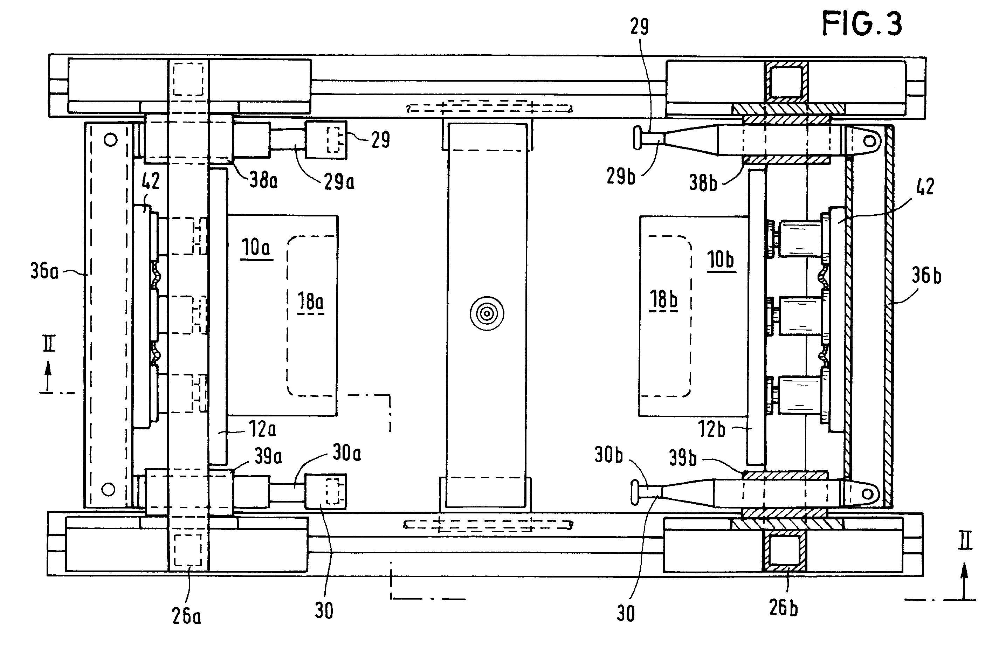

Das Schließgestell 22 ist mit zwei in einem vertikalen Abstand voneinander angeordneten Verriegelungseinrichtungen versehen. Jede Verriegelungseinrichtung besteht aus zwei in gleicher Höhe an entgegengesetzten Seiten der Blasform 10 angeordneten Verriegelungsseinheiten 29, 30; 31, 32. Beide Verriegelungseinrichtungen sind in gleicher Weise ausgebildet. Jede Verriegelungseinheit 29, 30; 31, 32 besteht aus zwei Teilen 29a, 29b; 30a, 30b; 31a, 31b; 32a, 32b. Die beiden Teile 29a, 30a der Verriegelungseinheiten 29, 30 sind an den Endbereichen eines oberen Querträgers 36a gelenkig befestigt, der in im wesentlichen horizontaler Ebene im oberen Bereich der Formhalteplatte 12a an deren der Formhälfte 10a abgekehrten Seite angeordnet ist und die Formhalteplatte seitlich etwas überragt, wie dies insbesondere Fig. 3 erkennen läßt. Der Formhalteplatte 12b ist in ihrem oberen Bereich ebenfalls ein in derselben Höhe angebrachter Querträger 36b zugeordnet, der an seinen beiden die Formhalteplatte 12b seitlich überragenden Endabschnitten jeweils mit einem Teil 29b bzw. 30b der beiden Verriegelungseinheiten 29, 30 um eine vertikale Achse schwenkbar verbunden ist.

Die Teile 31a, 31b; 32a, 32b der unteren Verriegelungseinrichtung sind in entsprechender Weise mit einem der Querträger 44a bzw. 44b verbunden, die in gleicher Höhe im unteren Bereich der Blasformteile angeordnet sind.

Jedes der Teile 29a, 29b; 30a, 30b; 31a, 31b; 32a, 32b der Verriegelungseinrichtungen ist in einer Buchse 38a, 38b, 39a, 39b gelagert, die am jeweiligen vertikalen Rahmen 26a bzw. 26b oder einer der Seitenplatten 27a, 27b der Gestellteile 24a bzw. 24b befestigt ist. Die Anordnung ist dabei so getroffen, daß einerseits ein fester Sitz des jeweiligen Teiles in der zugehörigen Buchse gewährleistet ist, der jedoch eine geringfügige Bewegung in Längsrichtung der Buchse ermöglicht. Diese Bewegung wird normalerweise maximal nur einige Millimeter betragen. Die jeweils mit den Teilen 29a, 29b, 30a, 30b; 31a, 31b, 32a, 32b verbundenen Querträger werden im wesentlichen von diesen Teilen und damit auch von der jeweiligen Buchse 38a, 38b; 39a, 39b getragen.

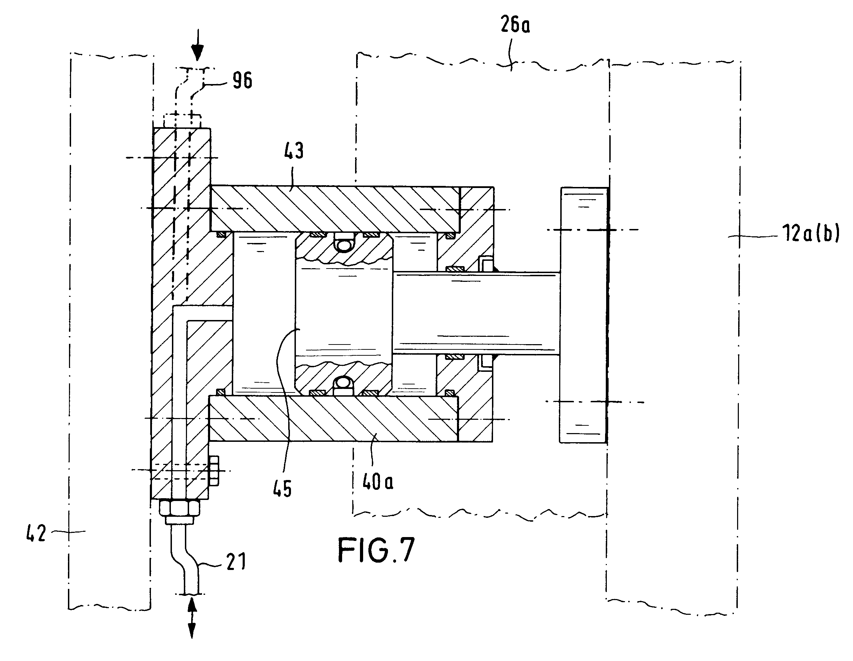

Aus der vorbeschriebenen Anordnung ergibt sich, daß die im wesentlichen als Balken ausgebildeten Querträger Teile des Schließgestelles sind und demzufolge an den Öffnungs- und Schließbewegungen der Blasformhälften teilnehmen. Die Verriegelung der Blasformhälften in der Schnließposition erfolgt, da die Verriegelungseinrichtungen an den Querbalken angreifen, über letztere. Um die dabei auf die Formhalteplatten 12a, 12b und damit auch die Blasformteile 10a, 10b einwirkenden Kräfte möglichst gleichmäßig zu verteilen, werden diese Kräfte von den Querbalken auf die jeweils zugeordenete Formhalteplatte unter Zwischenschaltung von hydraulischen Kraftübertragungsmitteln übertragen. Jedes dieser Kraftübertragungsmittel ist als hydraulische Zylinder-Kolben-Einheit ausgebildet, deren Kolben lediglich einen kurzen Hub ausführen kann. Der maximale mögliche Hub braucht nicht mehr als einige Millimeter zu betragen. Ein möglicher Aufbau eines derartigen hydraulischen Kraftübertragungsmittels ist in Fig. 7 dargestellt. Innerhalb des Zylinders 43, der unter Zwischenschaltung einer Zwischenplatte 42 sich am jeweiligen Querbalken abstützt, ist ein Kolben 45 geführt, der sich an der jeweiligen Formhalteplatte 12a bzw. 12b abstützt.

Bei dem in der Zeichnung dargestellten Ausführungsbeispiel sind jedem Querträger 36a, 36b; 44a, 44b sechs Kraftübertragungsmittel 40a-40f paarweise derart zugeordnet, daß jeweils zwei Kraftübertragungsmittel in einem kurzen Abstand übereinander vorhanden sind und jeweils ein Paar nahe einem der seitlichen Ränder der Formhalteplatte 12a bzw. 12b und ein Paar etwa in der durch eine vertikale Symmetrieachse definierte Mitte der jeweiligen Formhalteplatte angeordnet ist. Alle Kraftübertragungsmittel 40a - 40f, die demselben Querträger zugeordnet sind, bilden eine Gruppe. Sie sind durch Leitungen 41 hydraulisch miteinander verbunden. Über diese Leitungen ist ein Austausch der hydraulischen Flüssigkeit zwischen den Zylindern 43 der einzelnen Kraftübertragungsmittel möglich, der auch zu einer Vergleichmäßigung der durch die einzelnen Kraftübertragungsmittel auf die jeweils zugeordnete Formhalteplatte zu übertragenden Kräfte führt. Da die Kraftübertragungsmittel-Paare 40a, 40d; 40b, 40e; 40c, 40f insgesamt eine vertikale Erstreckung aufweisen, die größer ist als die vertikale Erstreckung des jeweiligen Querträgers, ist zwischen dem jeweiligen Querträger und der zugehörigen Gruppe von Kraftübertragungsmitteln die bereits erwähnte Zwischenplatte 42 angeordnet, die jedoch lediglich dazu dient, eine sichere Kraftübertragung vom jeweiligen Querträger auf die Kraftübertragungsmittel zu gewährleisten. Im einzelnen ist die Anordnung dabei so getroffen, daß die Zwischenplatte 42 fest am jeweiligen Querträger angebracht ist und die Zylinder der Kraftübertragungsmittel an der Zwischenplatte 42 befestigt sind, wohingegen die Kolben der Kraftübertragungsmittel mit der jeweiligen Formhalteplatte 12a, 12b verbunden sind.

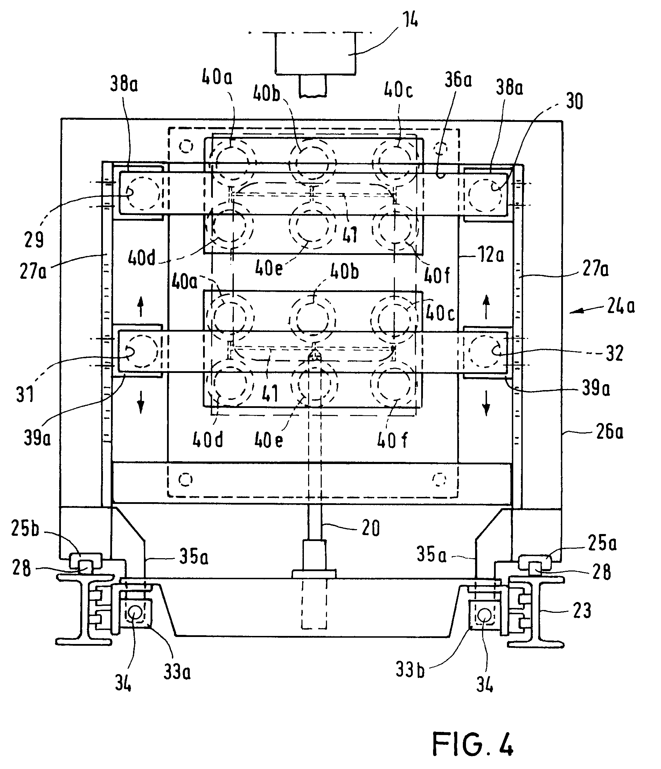

Die Fig. 1 und 4 lassen erkennen, daß die vorbeschriebene Ausgestaltung an allen vier paarweise angeordneten Querträgern vorhanden ist. Die Kraftübertragungsmittel 40a-40f jeder Gruppe, die jeweils einem Querträger zugeordnet ist, sind durch Leitungen 41 untereinander verbunden.

Bei dem in der Zeichnung dargestellten Ausführungsbeispiel sind die Querträger und damit auch die von ihnen getragenen beiden Verriegelungseinrichtungen 29, 30; 31, 32 etwa in Höhe der Bereiche angeordnet, in welchen beim Schließen der Blasform in der letzten Phase des Schließvorganges das Abquetschen des überschüssigen Materials vom Vorformling 16 erfolgt. Hier werden besonders große Kräfte wirksam, wobei durch die gewählte Anordnung der Querträger und der ihnen zugeordneten Kraftübertragungsmittel-Gruppen die Kräfte etwa in dem Höhenniveau aufgebracht werden, in welchem sie in erster Linie benötigt werden. D.h., daß insoweit das Auftreten von Momenten weitgehend vermieden werden kann.

Entsprechendes gilt auch für horizontale Verteilung der Kraftübertragungsmittel jeder Gruppe. Insbesondere die Fig. 3 und 4 lassen erkennen, daß die Kraftübertragungsmittel in der Projektion in Richtung des Pfeiles 17a bzw. 17b etwa in oder nahe dem Bereich angeordnet sind, in welchem sich auch das Formnest 18a, 18b befindet. Dabei liegen im dargestellten Ausführungsbeispiel die beiden äußeren Kraftübertragungsmittel-Paare 40a, 40d und 40c, 40f etwa in den Bereichen, in denen die seitlichen Begrenzungen des Formnestes verlaufen. Dies ist besonders günstig in den Fällen, in denen, wie es bei unregelmäßig geformten Hohlkörpern häufig der Fall ist, beim Schließen der Hohlform auch an beiden Seiten oder zumindest an einer Seite des Vorformlings Überschußmaterial abgeequetscht werden muß.

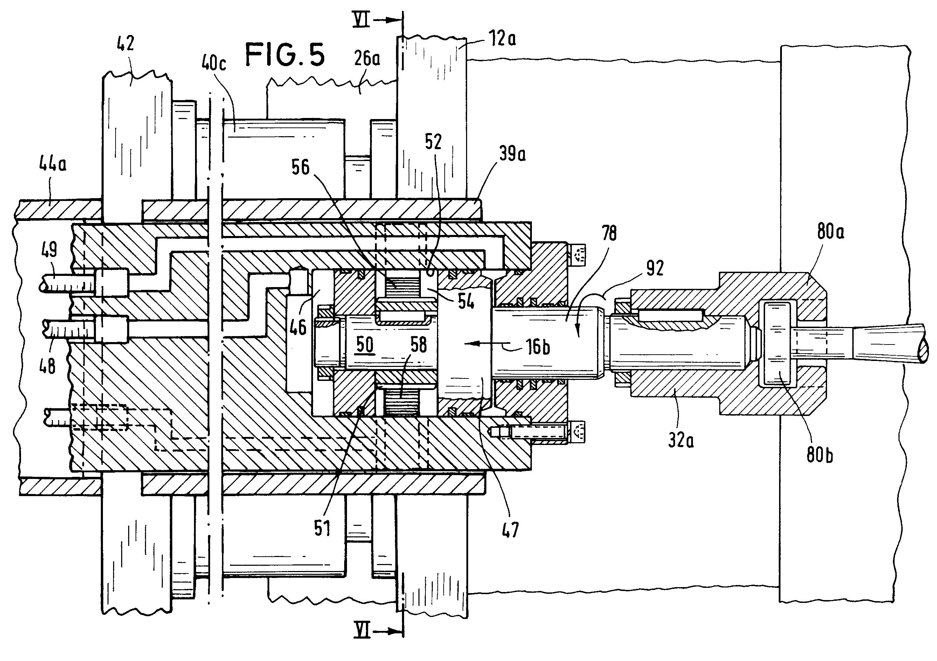

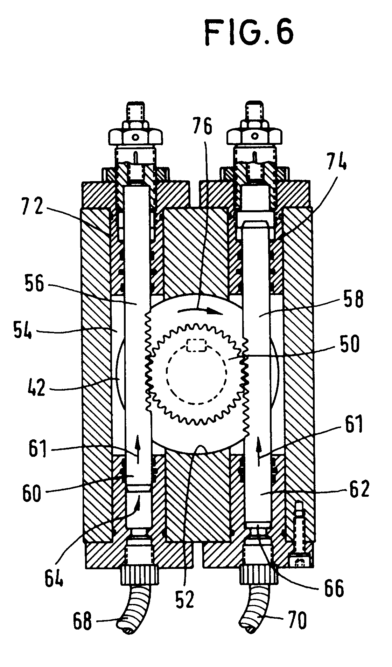

Die Ausgestaltung insbesondere der Teile 29a, 30a, 31a und 32a jeder Verriegelungseinheit geht aus Fig. 5 hervor. Jedes dieser Verriegelungsteile ist mit einem Zylinder 46 versehen, innerhalb dessen ein Kolben 47 hin- und herbewegbar geführt ist. Das hydraulische Druckmittel zur Beaufschlagung des Kolbens 42 wird über Leitungen 48, 49 zu- bzw. abgeleitet. Der Kolben 47 ist mit einem mittleren Bereich 50 kleineren Durchmessers versehen, an welchem ein vom Kolben getragenes und mit diesem fest verbundenes Zahnrad 51 angebracht ist, dessen Außendurchmesser so gewählt ist, daß zwischen der Wandung 52 des Zylinders und dem äußeren Umfang des Zahnrades 51 ein freier Raum 54 verbleibt, durch den sich zwei Zahnstangen 56, 58 erstrecken. Fig. 6 zeigt, daß die beiden Zahnstangen, die bei dem in der Zeichnung dargestellten Ausführungsbeispiel vertikal verlaufen, einen Abschnitt oder eine Verlängerung jeweils eines Kolbens 60, 62 darstellen, der in einem Zylinder 64 bzw. 66 geführt ist. Jeder der beiden Zylinder 64, 66 ist mit einer Leitung für das Zuleiten oder Ableiten des pneumatischen oder hydraulischen Druckmittels verbunden. Die den Leitungen abgekehrten Endbereiche der beiden Zahnstangen 56, 58 sind in Buchsen 68 bzw. 70 geführt. Die beiden Kolben 60, 62 sind lediglich einseitig beaufschlagbar, da bei Betätigung eines der beiden Kolben der jeweils andere Kolben zwangsläufig in seine Ausgangslage zurückbewegt wird. Fig. 6 zeigt die Teile in einer Position am Ende einer Hubbewegung der Zahnstange 56 in Richtung des Pfeiles 61 und demzufolge am Ende einer Rotationsbewegung des Kolbens 42 und damit des Zahnrades 50 in Richtung des Pfeiles 76.

An seiner dem jeweiligen Querträger abgekehrten Seite ist am Kolben 47 ein Verbindungsstück 78 fest angebracht, welches an seinem dem Kolben 47 abgekehrten Ende das Kupplungsglied 80a des hier dargestellten Verriegelungsteiles 32a trägt. Dieses Kupplungsglied 80a wirkt in noch zu beschreibender Weise mit einem Kupplungsglied 80b des Teiles 32b der Verriegelungseinheit zusammen. Das aufnehmende Kupplungsglied 80a ist an seinem freien Ende stirnseitig mit einer Öffnung versehen, die im Querschnitt etwa kreuzförmig ausgebildet ist. Der Querschnitt des mit dem aufnehmenden Kupplungsgliedes 80a zusammenwirkenden einzuführenden Kupplungsgliedes 80b ist an die Querschnittsform der Öffnung im aufnehmenden Kupplungsglied angepaßt, so daß bei entsprechender Winkelposition des aufnehmenden Kupplungsgliedes 80a das Kupplungsglied 80b durch diese Öffnung des aufnehmenden Kupplungsgliedes im Verlauf des Schließvorganges in letzteres eingeführt werden kann. Danach erfolgt eine Verdrehung des aufnehmenden Kupplungsgliedes 80a um dessen Längsachse bzw. um die Längsachse des Verriegelungsteiles, so daß ein Formschluß zwischen den beiden Kupplungsgliedern entsteht. Diese Position ist in Fig. 5 dargestellt.

Im Verlauf der Schließbewegung der Blasformteile 10a, 10b werden somit die beiden Kupplungsteile 80a, 80b zunächst in Eingriff miteinander gebracht. Diese relative Position zwischen aufnehmenden Kupplungsglied 80a und Kupplungskopf 80b wird in der letzten Phase der Schließbewegungen der beiden Blasformteile erreicht, wenn die beiden einander zugekehrten Flächen der Blasformteile 10a, 10b nur noch einen Abstand von wenigen Millimetern, z. B. 5-20 mm, voneinander aufweisen. Nach Erreichen dieser Position werden durch Betätigen der Zahnstange 58 in Richtung des Pfeiles 16 mittels Beaufschlagung des Zylinders 66 über die Zuleitung 70 das Zahnrad 50 und damit der Kolben 44 in Richtung des Pfeiles 92 der Fig. 4 um einen Weg im Bogenmaß rotiert, der zu einem Formschluß zwischen den beiden Kupplungsteilen 80a, 80b führt, welcher das Übertragen von axialen Kräften von dem einen Teil 32a der Verriegelungseinrichtung auf das andere Teil 32b derselben erlaubt und umgekehrt. Danach wird der Kolben 42 über die Zuleitung 46 beaufschlagt, so daß eine Verschiebung des Kolbens 42 und des mit diesem verbundenen Kupplungsgliedes 80a in Richtung des Pfeiles 16b erfolgt, wodurch die beiden Kupplungsglieder 80a und 80b und somit die beiden Blasformteile 10a, 10b gegeneinander verriegelt und verspannt werden.

Von Bedeutung ist dabei, daß über die Verriegelungseinrichtungen nicht nur die Schließkraft, also jene Kraft, die dem Blasdruck innerhalb der Blasform 10 entgegenwirkt, mit verhältnismäßig einfachen Mitteln aufgebracht oder zumindest erheblich vergrößert werden kann. Vielmehr beseteht auch die bereits erwähnte Möglichkeit, über die Verriegelungseinrichtungen in der letzten Phase des Schließvorganges die Kräfte aufzubringen, die erforderlich sind, um Bereiche des Vorformlings, die sich außerhalb des Formnestes 18a, 18b befinden, vom Vorformling abzuquetschen, wobei ggf. auch zugleich eine Schweißnaht gebildet wird. Diese Vorgänge verlangen in vielen Fällen das Einhalten bestimmter Bedingungen, insbesondere bezüglich des Ablaufs des Schließvorganges. Dabei wird auf die DE-PS 23 64 510 verwiesen, in welcher die Zusammenhänge und Bedingungen erläutert und dargestellt sind. Das Verwenden der Verriegelungseinrichtungen für den Abquetschvorgang erlaubt es ohne weiteres, diese Bedingungen einzuhalten.

In jedem Fall wird bei Anwendung der Lehre gemäß der Erfindung eine Vergleichmäßigung der durch die Verriegelungseinrichtungen auf die Blasformhälften übertragenen Kräfte bewirkt mit der Folge, daß ungleichmäßige Beaufschlagungen der Blasformteile, die zu den einleitend beschriebenen Nachteilen und Unzulänglichkeiten führen, vermieden werden. Es wird zwar nach wie vor möglich sein, daß die Querträger unter der Einwirkung der sehr hohen Schließkräfte, die mehr als 100 t betragen können, Verbiegungen erfahren, die natürlich maximal nur einige wenige Millimeter betragen werden. Aufgrund des Vorhandenseins der Kraftübertragungsmittel führt jedoch eine Verbiegung des jeweiligen Querträgers zu einer entsprechend stärkeren Beaufschlagung der außen angeordneten Kraftübertragungsmittel 40a, 40d bzw. 40c, 40f, die zu einer Verdrängung eines entsprechenden Teils der in diesen Kraftübertragungsmitteln befindlichen hydraulischen Flüssigkeit über die Leitungen 41 in die beiden in der Mitte befindlichen Kraftübertragungsmittel 40b, 40c führt, so daß selbsttätig ein Ausgleich und damit eine Vergleichmäßigung der auf die Formhalteplatten und damit die Formteile einwirkenden Kräfte erfolgt. Es liegt auf der Hand, daß durch entsprechende Bemessung der Anzahl der Kraftübertragungsmittel und deren Anordnungen in Abhängigkeit von den jeweiligen Verhältnissen eine sehr weitgehende Vergleichmäßigung erreicht werden kann. Ein wesentlicher Vorteil besteht zweifellos darin, daß diese Vergleichmäßigung der auf die Formteile einwirkenden Kräfte mit einfachen Mitteln möglich ist, wobei zudem bei entsprechender Verstellbarkeit der zusammenwirkenden Teile, also insbesondere der Querträger und der Kraftübertragungsmittel, eine Anpassung an unterschiedliche Gegebenheiten bezüglich Größe der Blasform, Lage des Formnestes bzw. der Formnester, Lage der Abquetschkanten usw.

Fig. 7 zeigt ein Kraftübertragungsmittel, welches über eine Ausgleichsleitung 21 mit weiteren zu derselben Gruppe gehörenden Kraftübertragungsmittel verbunden ist. Diese Ausführungsform weist insoweit eine Besonderheit auf, als sie über eine Leitung 96 mit einer Quelle für ein hydraulisches Druckmedium verbunden ist, durch welches die über die Ausgleichsleitung 21 miteinander verbundenen Kraftübertragungsmittel zusätzlich hydraulisch beaufschlagt werden können, um so eine von außen steuerbare Verschiebung der Kolben 45 der Kraftübertragungsmittel einer Gruppe zu bewirken. Eine solche Ausgestaltung kann dann zweckmäßig sein, wenn die Kraftübertragungsmittel auch dazu dienen sollen, in der letzten Phase des Schließvorganges die Verschiebung der Blasformteile zu unterstützen oder ggf. ausschließlich zu bewirken, um so die für die bereits erwähnten Abquetschvorgänge am Vorformling erforderlichen Kräfte aufzubringen. In diesem Falle wäre es nicht erforderlich, daß die Verriegelungseinheiten längsverschiebbare Kolben 47 aufweisen, da deren Funktion von den Kraftübertragungsmitteln übernommen wird. Allerdings besteht auch die Möglichkeit, sowohl die längsverschiebbaren Kolben 47 und von außen steuerbare Kraftübertragungsmittel vorzusehen, wobei dann die Wirkungen beider Mittel einander ergänzen würden. Eventuell müßten die Kolben der Kraftübertragungsmittel bei zusätzlicher Beaufschlagung von außen einen etwas größeren Hub aufweisen. Dies hängt von dem Weg ab, den das jeweilige Blasformteil beim Abquetschvorgang zurückzulegen hat.

Im allgemeinen wird es zweckmäßig sein, für jedes Kraftübertragungsmittel über eine separate Leitung 96 eine Verbindung mit der zusätzlichen Quelle für ein hydraulisches Druckmittel herzustellen, um so für alle Kraftübertragungsmittel möglichst gleiche Bedingungen bezüglich Länge und Querschnitt der Fließwege und/oder anderer die Druckverhältnisse bestimmender Einflußgrößen zu erhalten.

## Patentansprüche

1. Verfahren zum Herstellen von Hohlkörpern aus thermoplastischem Kunststoff aus einem Vorformling (16) im Blasverfahren unter Verwendung einer aus wenigstens zwei Teilen (10a, 10b) bestehenden Blasform (10) und wenigstens eines Antriebsmittels (22a, 22b), durch welches die beiden Blasformteile (10a, 10b) zwischen einer Position, in welcher die Blasform (10) geöffnet ist, und einer Position, in welcher die Blasform geschlossen ist, bewegt werden, und unter Verwendung wenigstens einer Einrichtung (29, 30, 31, 32), durch welche die Blasformteile (10a, 10b) durch in Schließrichtung wirkende Kräfte beaufschlagt und spätestens bei geschlossener Blasform miteinander verriegelt werden, wobei jedem der miteinander zu verriegelnden Blasformteile (10a, 10b) wenigstens ein Teil (29a, 29b; 30a, 30b; 31a, 31b, 32a, 32b) der Verriegelungseinrichtung zugeordnet ist und die Teile der Verriegelungseinrichtung über lösbare Kupplungsglieder (80a, 80b) miteinander in Eingriff gebracht werden, dadurch gekennzeichnet, daß die von der wenigstens einen Verriegelungseinrichtung (29, 30, 31; 32) in Schließrichtung aufgebrachten Kräfte auf wenigstens eines der Blasformteile (10a, 10b) unter Zwischenschaltung von wenigstens zwei einen Abstand voneinander aufweisenden hydraulischen Kraftübertragungsmitteln (40a, 40b, 40c, 40d, 40e, 40f) übertragen werden und die wenigstens zwei hydraulischen Kraftübertragungsmittel hydraulisch miteinander in Verbindung stehen.

2. Verfahren nach Anspruch 1, dadurch gekennzeichnet, daß wenigstens ein Teil der Kräfte durch die hydraulischen Kraftübertragungsmittel (40a, 40b, 40c, 40d, 40e, 40f) auf jenen Bereich des Blasformteils (10a, 10b) übertragen wird, der in der Projektion in Schließrichtung innerhalb des wenigstens einen Formnestes (18a, 18b) der Blasform (10) liegt.

3. Verfahren nach Anspruch 1, dadurch gekennzeichnet, daß wenigstens ein Teil der Kräfte durch die Kraftübertragungsmittel (40a, 40b, 40c, 40d, 40e, 40f) auf jenen Bereich des Blasformteils (10a, 10b) übertragen wird, welcher zur Durchführung von Abquetschvorgängen am Vorformling (16) dient.

4. Verfahren nach Anspruch 1, dadurch gekennzeichnet, daß das aus wenigstens zwei hydraulischen Kraftübertragungsmitteln (40a, 40b, 40c, 40d, 40e, 40f) und der diese miteinander verbindenden Hydraulikleitung (41) bestehende System wenigstens in der letzten Phase des Schließens der Blasform (10) in Schließrichtung durch eine zusätzliche Hydraulik-Druckquelle beaufschlagt wird.

5. Vorrichtung zum Herstellen von Hohlkörpern aus thermoplastischem Kunststoff im Blasverfahren mit einem Scnließgestell (22) für eine aus wenigstens zwei Teilen (10a, 10b) bestehenden Blasform (10) und wenigstens einem Antriebsmittel (22a, 22b), um die beiden Blasformteile (10a, 10b) zwischen einer Position, in welcher die Blasform (10) geöffnet ist, und einer Position, in welcher die Blasform (10) geschlossen ist, zu bewegen, und mit wenigstens einer Einrichtung (20, 30, 31, 32), durch welche die Blasformteile (10a, 10b) durch in Schließrichtung wirkende Kräfte beaufschlagt und spätestens bei geschlossener Blasform (10) miteinander verriegelt werden, wobei jedem der miteinander zu verriegelnden Blasformteile (10a, 10b) wenigstens ein Teil (29a, 29b; 30a, 30b; 31a, 31b; 32a, 32b) der Verriegelungseinrichtung zugeordnet ist und die Teile der Verriegelungseinrichtung (29, 30; 31, 32) bei geschlossener Blasform über lösbare Kupplungsglieder (80a, 80b) miteinander in Eingriff sind, dadurch gekennzeichnet, daß die von der Verriegelungseinrichtung (29, 30; 31, 32) in Schließrichtung aufgebrachten Kräfte auf wenigstens eines der Blasformteile (10a, 10b) unter Zwischenschaltung von wenigstens zwei einen Abstand voneinander aufweisenden hydraulischen Kraftübertragungsmitteln (40a, 40b, 40c, 40d, 40e, 40f) übertragen werden und die wenigstens zwei hydraulischen Kraftübertragungsmittel hydraulisch miteinander verbunden sind.

6. Vorrichtung nach Anspruch 5, dadurch gekennzeichnet, daß wenigstens eines der hydraulischen Kraftübertragungsmittel (40a, 40b, 40c, 40d, 40e, 40f) in der Projektion in Schließrichtung der Blasformteile (10a, 10b) im Bereich des wenigstens eines Formnestes (18a, 18b) der Blasform (10) angeordnet ist.

7. Vorrichtung nach Anspruch 5, dadurch gekennzeichnet, daß wenigstens ein Teil der Kraftübertragungsmittel (40a, 40b, 40c, 40d, 40e, 40f) in der Projektion in Schließrichtung der Blasformteile (10a, 10b) im Bereich einer Abquetschkante der Blasformteile (10a, 10b) angeordnet ist.

8. Vorrichtung nach Anspruch 5, dadurch gekennzeichnet, daß jedes der Blasformteile (10a, 10b) von einer Formhalteplatte (12a, 12b) getragen ist und die Verriegelungseinrichtung (29, 30; 31, 32) mit den Formhalteplatten verbunden ist und die hydraulischen Kraftübertragungsmittel (40a, 40b, 40c, 40d, 40e, 40f) wenigstens zwischen einem Blasformteil (10a, 10b) und der dieses tragenden Formhalteplatte (12a, 12b) angeordnet sind.

9. Vorrichtung nach Anspruch 8, dadurch gekennzeichnet, daß die die Blasformteile (10a, 10b) tragenden Formhalteplatten (12a, 12b) mit wenigstens einem Querträger (36 36b; 44a, 44b) versehen sind, der das jeweilige Formteil (10a, 10b) bzw. die zugehörige Formhalteplatte (12a, 12b) seitlich und/oder oben und unten überragt und die dem zugehörigen Blasformteil zugeordneten Teile (29a, 29b, 30a, 30b; 31a, 31b, 32a, 32b) der Verriegelungseinrichtung (29, 30; 31, 32) trägt, wobei wenigstens einer der Querträger (36a, 36b; 44a, 44b) mit der ihm zugeordneten Formhalteplatte unter Zwischenschaltung von wenigstens zwei einen Abstand voneinander aufweisenden hydraulischen Kraftübertragungsmitteln (40a, 40b, 40c, 40d, 40e, 40f) verbunden ist, die miteinander hydraulisch verbunden sind.

10. Vorrichtung nach Anspruch 9, dadurch gekennzeichnet, daß wenigstens drei hydraulische Kraftübertragungsmittel (40a, 40b, 40c, 40d, 40e, 40f) entlang dem Längsverlauf des Querträgers (36a, 36b; 44a, 44b) angeordnet sind.

11. Vorrichtung nach Anspruch 8, dadurch gekennzeichnet, daß zwischen Querträger (36a, 36b; 44a, 44b) und zugehöriger Formhalteplatte (12a, 12b) eine Zwischenplatte (42) angeordnet ist und die hydraulischen Kraftübertragungsmittel (40a, 40b, 40c, 40d, 40e, 40f) zwischen Formhalteplatte (12a, 12b) und Zwischenplatte (42) angeordnet sind.

12. Vorrichtung nach Anspruch 11, dadurch gekennzeichnet, daß die Zwischenplatte (42) eine größere Breite aufweist als der Querträger (36a, 36b; 44a, 44b).

13. Vorrichtung nach Anspruch 8, dadurch gekennzeichnet, daß wenigstens einer der Formhalteplatten (12a, 12b) wenigstens zwei in einem Abstand voneinander angeordnete Querträger (36a, 36b; 44a, 44b) zugeordnet sind und jedem Querträger eine Gruppe von hydraulischen Kraftübertragungsmitteln (40a, 40b, 40c, 40d, 40e, 40f) zugeordnet ist und die Kraftübertragungsmittel jeder Gruppe untereinander hydraulisch verbunden sind.

14. Vorrichtung nach Anspruch 9, dadurch gekennzeichnet, daß die wenigstens zwei Querträger (36a, 36b; 44a, 44b) jeder Formhalteplatte (12a, 12b) parallel zueinander verlaufend angeordnet sind.

15. Vorrichtung nach Anspruch 9, dadurch gekennzeichnet, daß die hydraulischen Kraftübertragungselemente (40a, 40b, 40c, 40d, 40e, 40f) jedes Querträgers in zwei zueinander parallelen Reihen angeordnet sind.

16. Vorrichtung nach Anspruch 9, dadurch gekennzeichnet, daß die wenigstens zwei Querträger (36a, 36b; 44a, 44b) jeder Formhalteplatte (12a, 12b) parallel zueinander verlaufend angeordnet sind.

17. Vorrichtung nach Anspruch 9, dadurch gekennzeichnet, daß die Querträger (36a, 36b; 44a, 44b) unabhängig von den Formhalteplatten (12a, 12b) auf dem Schließgestell (22) abgestützt sind.

18. Vorrichtung nach Anspruch 9, dadurch gekennzeichnet, daß wenigstens einer der Querträger (36a, 36b; 44a, 44b) gegenüber den Blasformteilen (10a, 10b) bzw. den Formhalteplatten (12a, 12b) mit den jeweiligen Kraftübertragungsmitteln (40a, 40b, 40c, 40d, 40e, 40f) verstellbar angebracht ist.

19. Vorrichtung nach Anspruch 17, dadurch gekennzeichnet, daß die Kraftübertragungsmittel (40a, 40b, 40c, 40d, 40e, 40f) von den Querträgern (36a, 36b; 44a, 44b) und/oder von den an den Querträgern befestigten Zwischenplatten (42) getragen werden.

20. Vorrichtung nach Anspruch 5, dadurch gekennzeichnet, daß das aus wenigstens zwei hydraulischen Kraftübertragungsmitteln (40a, 40b, 40c, 40d, 40e, 40f) und den diese miteinander verbindenden Hydraulikleitungen (41) bestehende System an eine mit einem zusätzlichen Antrieb versehene Hydraulik-Druckquelle angeschlossen werden kann.

21. Vorrichtung nach Anspruch 20, dadurch gekennzeichnet, daß jedes der hydraulischen Kraftübertragungsmittel (40a, 40b, 40c, 40d, 40e, 40f) einer Gruppe direkt mit der zusätzlichen Hydraulik-Druckquelle verbunden werden kann.
